(19) Europäisches Patentamt
European Patent Office
Office européen des brevets

(11) **EP 4 449 603 B1**

(12) **EUROPEAN PATENT SPECIFICATION**

(45) Date of publication and mention of the grant of the patent:
**24.06.2026 Bulletin 2026/26**

(21) Application number: **22847350.0**

(22) Date of filing: **14.12.2022**

(51) International Patent Classification (IPC):
*H02M 3/158* (2006.01)    *H02M 1/00* (2006.01)

(52) Cooperative Patent Classification (CPC):
**H02M 3/1584; H02M 1/0003; H02M 1/0025**

(86) International application number:
**PCT/US2022/052849**

(87) International publication number:
**WO 2023/114303 (22.06.2023 Gazette 2023/25)**

(54) **MULTI SLOPE OUTPUT IMPEDANCE CONTROLLER TO REDUCE CURRENT IMBALANCE IN A MASTERLESS CONFIGURATION OF N PARALLEL-CONNECTED POWER CONVERTERS AND IMPROVE LOAD REGULATION IN A SINGLE POWER CONVERTER**

AUSGANGSIMPEDANZREGLER MEHRERER NEIGUNGEN ZUR REDUZIERUNG VON STROMUNGLEICHGEWICHT IN EINER MASTERLOSEN KONFIGURATION MIT N PARALLELELGESCHALTETEN LEISTUNGSWANDLERN UND ZUR VERBESSERUNG DER LASTREGELUNG BEI EINEM EINZELNEN LEISTUNGSWANDLER

RÉGULATEUR D'IMPÉDANCE DE SORTIE À PENTES MULTIPLES POUR RÉDUIRE LE DÉSÉQUILIBRE DE COURANT DANS UNE CONFIGURATION SANS MAÎTRE AVEC N CONVERTISSEURS DE PUISSANCE EN PARALLÈLE ET AMÉLIORER LA RÉGULATION DE LA CHARGE DANS UN CONVERTISSEUR DE PUISSANCE UNIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2021 US 202163289884 P**
**14.03.2022 US 202217694338**

(43) Date of publication of application:
**23.10.2024 Bulletin 2024/43**

(73) Proprietor: **Raytheon Company**
**Tewksbury, MA 01876 (US)**

(72) Inventors:
• **PERRY, Marty**
  **Tucson, AZ 85749 (US)**
• **SCHALLER, Robert, J.**
  **Tucson, AZ 85748 (US)**

(74) Representative: **Crowell & Moring U.K. LLP**
**199 Bishopsgate**
**London EC2M 3TY (GB)**

(56) References cited:
**EP-A1- 3 447 882       CN-A- 106 961 101**
**CN-A- 111 812 525      US-A1- 2004 264 219**
**US-A1- 2018 041 173    US-A1- 2020 251 909**

• YUN WEI LI: "Control and Resonance Damping of Voltage-Source and Current-Source Converters With Filters", IEEE TRANSACTIONS ON INDUSTRIAL ELECTRONICS, IEEE SERVICE CENTER, PISCATAWAY, NJ, USA, vol. 56, no. 5, 1 May 2009 (2009-05-01), pages 1511 - 1521, XP011249048, ISSN: 0278-0046

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the Invention

This invention relates to regulated power supplies capable of supplying a range of load currents to a load and more particularly to a masterless configuration of N parallel-connected power supplies each of which includes a passively or synchronously rectified power converter connected in a negative feedback loop to facilitate sharing of the load current and maintain regulation of the output voltage.

Description of the Related Art

A power supply may include a power converter that converts an unregulated DC input voltage Vin to a regulated DC output voltage Vout, usually at a different level, for supplying a range of load currents IL to a load. A vast variety of topologies for power converters have been introduced over the years. Further, the need for small size and high efficiency places additional limitations on the available topologies. Small size equates to high power density, and power density is the ratio of output power capability to converter volume.

A switching power converter (SPC) has an energy storage section and a switching control circuit such as a pulse width modulator (PWM), a primary switch, and a rectifier. The energy storage section is responsive to the selective application of the DC input voltage to produce a current and the regulated DC output voltage. The switching control circuit, primary switch and rectifier control the application of the DC input voltage to the energy storage section to set the value of the regulated DC output voltage.

Synchronous rectification has become a desirable alternative to passive rectifiers in power converters due to the increased power conversion efficiency that results at least in part from reduced power losses and higher density. While diodes only permit current flow in one direction, synchronous rectifiers such as MOSFETs, or other equivalent active switches permit current flow in either direction

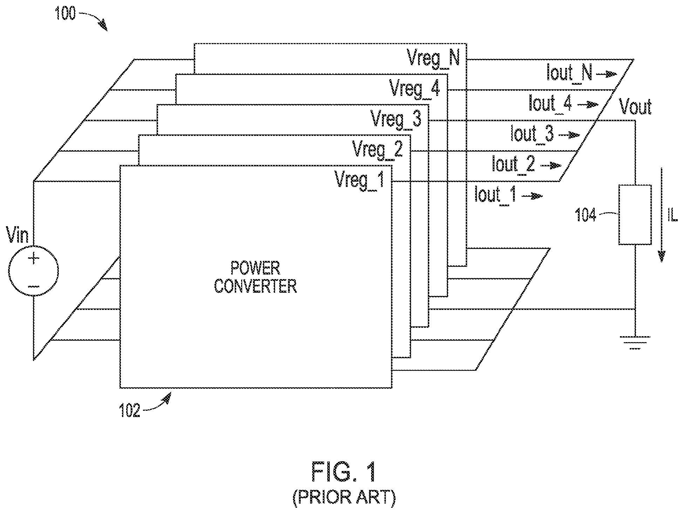

Power supplies based on modular power converters are desirable as they allow sharing of power loads across multiple units and allow flexibility to scale the power solution for a variety of applications. As shown in Figure 1, a power supply **100** includes N parallel-connected power converters **102** that draw energy from a voltage source Vin with their outputs in parallel powering a common load **104**. The power supply **100** produces a regulated output voltage Vout across the load **104** and supplies a load current Il to the load over a specified range of current levels. Each power converter **102** is configured to produce a regulated voltage Vreg_n and an output current Iout_n through an output impedance Zout_n.

Ideally each power converter supplies 1/N of the load current IL. To minimize the complexity and enhance the scalability at the array level it is desirable to parallel the power converters in a masterless configuration where the converters share load current without load current information needing to be communicated to the various modules or having special control modules that manage load sharing.

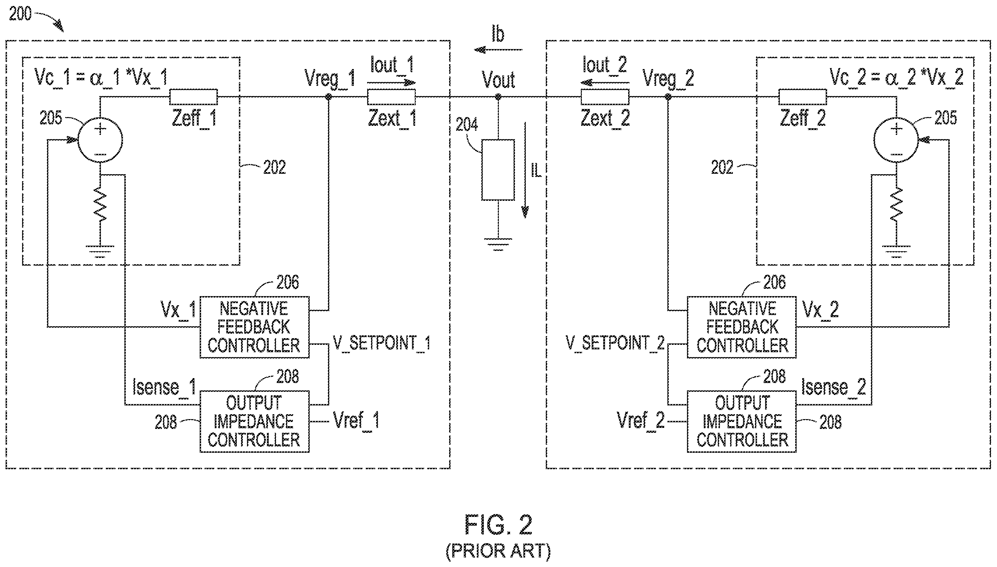

As shown in Figure 2, a power supply **200** includes N=2 parallel-connected power converters **202** in a masterless configuration to regulate an output voltage Vout and supply load current IL to a load **204**. Each power converter **202** is depicted as a dependent source **205** in which a command voltage Vx_n is multiplied by a gain $\alpha$_n to produce a controllable voltage Vc_n and is characterized by an open-loop output impedance Zout_OL. The existence of energy source Vin is presumed in a dependent source.

To improve regulation, closed loop control with negative feedback is typically applied to the open loop power converter. A negative feedback controller **206** will force the output voltage Vreg_n of the power converter to be equal to a setpoint voltage V_setpoint_n, which is offset from the reference voltage Vref_n. An output impedance controller **208** is coupled to Vref_n and responsive to a sense current Isense_n, which is indicative of Iout_n, to generate an offset to form V_setpoint_n. A feature of negative feedback is to lower the open loop output impedance Zout_OL of the power converter by the loop gain of the negative feedback controller. If the negative feedback controller has an open loop gain of T then the closed loop output impedance of the power converter will be:

$$Zout_{CL} = \frac{Zout\_OL}{1+T}$$

For example if T+1= 60dB then the open loop output impedance of the converter would be reduced by factor of 1000.

An output impedance controller **208** is coupled to Vref_n and responsive to a sense current Isense_n, which is indicative of Iout_n, to generate an offset to form V_setpoint_n. Controller **208** maintains a constant effective output impedance Zeff_n from $Zout_{CL}$ for the power converter over the range of load currents. A typical controller **208** includes a current amplifier that compares Isense_n to a current reference (e.g. the midpoint of the load current range), a fixed gain amplifier to amplify the error signal, a filter that fixes a bandwidth of the output impedance control loop to be less than the bandwidth of the negative feedback loop that controls Vout and an amplifier produce the offset to generate V_setpoint_n. Typically, the bandwidth of the negative feedback loop drops as the load current is reduced. Therefore, the fixed bandwidth of the output impedance control loop must be set to be less than the bandwidth of the negative feedback loop for the lowest supported load current to avoid interaction between the control loops.

Ideally, all of the power converters 202 would have the exact same reference voltage, negative feedback loop etc. and would share the load current equally during start-up and steady-state over the entire supported range of load currents. However, in a masterless configuration each converter has its own Vref, which will vary within a specified tolerance, non-linearities, etc. This can lead to a current imbalance Ib among the power converters that leads to power inefficiency, stress on individual converters or a failure and shutdown of the power supply. In passively rectified power converters, at low load current IL and low Iout_n one power converter may dominate and supply 100% of the load current while the other power converters turn off. In synchronously rectified power converters, at low Iout_n a circulating current Ic will flow between the power converters. If Vc_1 does not exactly match Vc_2 due to differences in Vx1 and Vx2 or slight differences in $\alpha$_1 and $\alpha$_2 then a circulating current Ic will flow between the two converters:

$$Ic = \frac{Vc\_1 - Vc\_2}{Zout\_1 + Zout\_2}$$

where Zout_n = Zeff_n at this point. Once the output voltages of the power converters are well regulated and their output currents Iout_n > 2*IC under a no load condition then Ic under load will be approximately zero.

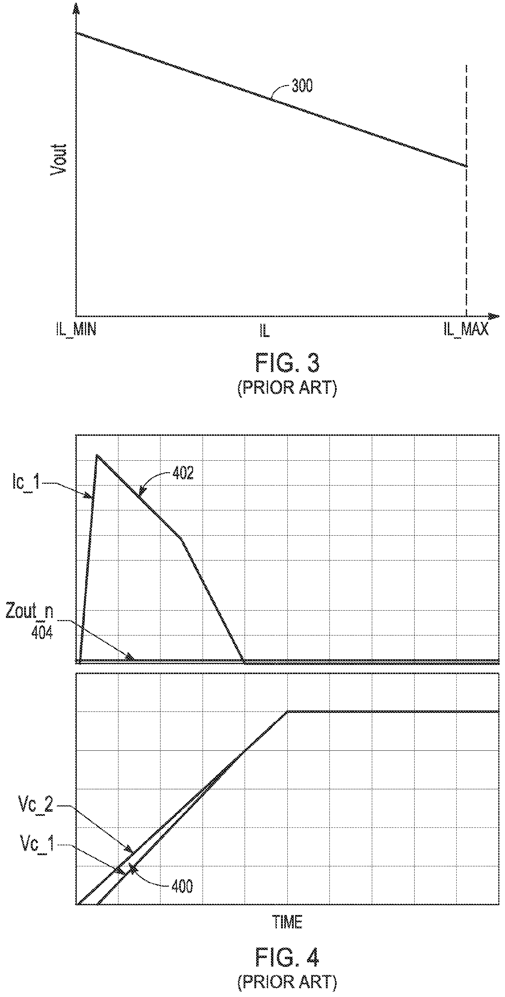

As shown in Figure 3, a common technique to force the N power converters to reach equilibrium in which all of the power converters share the load current IL and are balanced to share equally e.g., (1/N)*Il, is referred to as "droop share". An output load line 300 that plots Vout versus Iload has a negative slope such that the output voltage of each power converter is reduced as its output current is increased. The slope of the load line is the total output impedance. An individual power converter will tend to dominate if its Vref, hence Vsetpoint and Vreg are relatively high. However, because of the load line implemented by the negative feedback control loop, the output current Iout flowing through the total output impedance will tend to pull the voltage down. Once Iout is sufficiently high, the power converter's output voltage will drop to a point that the other power converters will turn on and start to supply load current. The masterless power converters respond independently but together reach an equilibrium at which all share, and share approximately equally, to supply the load current.

As shown in Figure 2, each power converter 202 may include an additional external output impedance Zext_n outside the control loop connection such that Zout_n = Zeff_n + Zext_n. In this case the desired output impedance of the converter is significantly more complicated than the standard droop share technique can accommodate. Output impedances outside the control loop are commonly found in parallel array power systems and or converters that use primary side regulation. This impedance may also be provided by physical connections between the output of the power converter and the load terminal. All power supplies will exhibit some degree of external output impedance, the issue is whether its significant enough to affect control.

During power converter startup, the output voltage of each converter is ramped from an initial value e.g., zero volts to the final setpoint voltage, by ramping the Vref_n. The "ramp" may be linear, a sequence of steps or a higher order function. When parallel converters are started in a masterless system, slight errors in the ramp rates of the converters and non-linear effects can create significant current imbalance Ib. For a masterless configuration of passively rectified power converters, the result will typically be that a single power converter will turn on and supply the load current as the output voltage is ramped up. Only when the load current, hence individual output currents Iout_n, are high enough will droop share be effective to turn on the other power converters and force sharing. As shown in Figure 4, for a masterless configuration of two synchronously rectified power converters, starting with non-equal start times, linearity and ramp rates for Vc_1 and Vc_2 can produce a difference voltage 400 that can cause significant circulating current Ic 402 to flow between the converters. In both cases the output impedance of the power converters Zout_n 404 is a fixed value equal to the sum of Zeff_n and Zext_n.

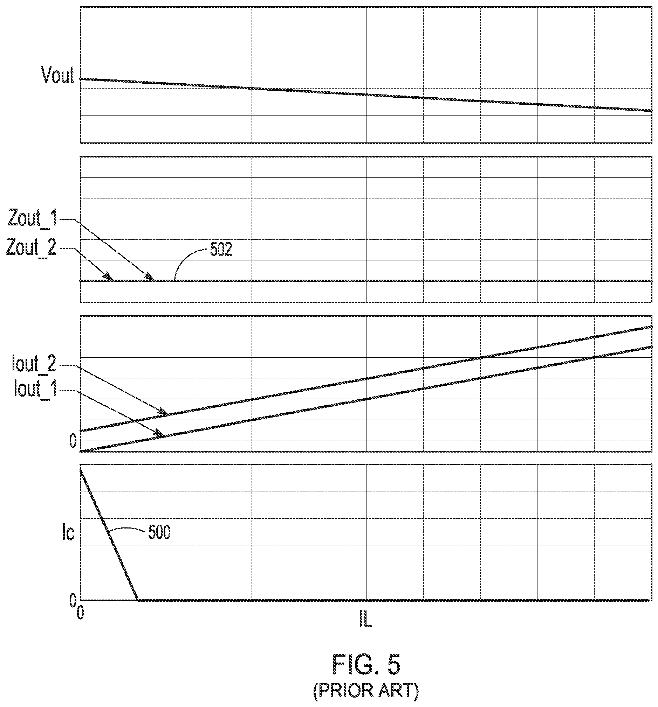

During steady-state, the power supply and the individual power converters will be required to source varying amounts of load current IL over a specified range while maintaining regulation of the output voltage Vout. For passively rectified converters, if the load current IL, hence the individual output currents Iout_n, are too small droop share can fail resulting in either one or a small number of the converters supplying the load current. In general, Iload has to exceed a certain value before all of the converters turn on and share the load current. As shown in Figure 5, for synchronously rectified converters, if the load current IL, hence the individual output currents Iout_n, are too small a circulating current Ic 500 will flow between the converters. In general, the Ic during steady-state will be much less than that during start-up because the converters should be well-regulated. In general, Iload > 2*Ic under no load conditions before Ic under load will approximate zero. In both cases the output impedance of the power converters Zout_n 502 is a fixed value equal to the sum of Zeff_n and Zext_n.

Known techniques pick a fixed value of Zeff that balances the competing requirements during start-up and steady-state to facilitate sharing, limit the current imbalance and maintain load regulation. A larger value of Zeff improves droop share to facilitate sharing at start-up or for low levels of load current and reduce current imbalance Ib while a smaller value of Zeff improves load regulation. The two must be compromised.

Examples concerning load current sharing with droop control are disclosed in CN106961101 and EP3447882.

## SUMMARY OF THE INVENTION

The invention is defined by the features of device claim 1. The dependent claims recite advantageous embodiments of the invention.

The following is a summary of the invention in order to provide a basic understanding of some aspects of the invention. This summary is not intended to identify key or critical elements of the invention or to delineate the scope of the invention. Its sole purpose is to present some concepts of the invention in a simplified form as a prelude to the more detailed description and the defining claims that are presented later.

The present invention provides a multi slope output impedance controller capable of varying the effective impedance Zeff of a power converter to reduce a current imbalance between power supplies in a masterless configuration of N parallel-connected power supplies while maintaining load regulation or of setting a negative Zeff to optimize load regulation for a single power converter.

In an embodiment, a regulated power supply includes a plurality N of parallel-connected power supplies in a masterless configuration configured to supply power to a load terminal. Each power supply includes a power converter connected in a negative feedback loop with its own reference voltage Vref_n to supply an output current Iout_n through an external output impedance Zext_n (outside the negative feedback loop) to the load terminal. Acting independently the N power supplies together share the load current IL over a range of load currents and provide a regulated output voltage Vout over that range. The negative feedback loop is configurable to vary an effective output impedance Zeff_n of the power converter responsive to Iout_n to reduce the current imbalance Ib between the power supplies during start-up and steady-state while maintaining load regulation.

In an embodiment of the masterless configuration of N parallel-connected power supplies, each power converter is responsive to a command Vx_n to generate a controllable voltage Vc_n across Zeff_n to supply Iout_n at an output that is coupled through Zext_n to the load terminal. A negative feedback controller is configured to provide the negative feedback loop in which a regulated voltage Vreg_n at the output is compared to a setpoint voltage Vsetpoint_n (offset from Vref_n) to control command Vx_n to maintain regulation of Vreg_n and output voltage Vout at the load terminal for varying load currents IL. A multi slope output impedance controller is configured to sense a current Isense_n indicative of Iout_n to control Vsetpoint_n such that Vreg_n is reduced as Iout_n is increased to facilitate load current sharing among the plurality of power supplies (common droop share), command a high value of Zeff_n when Iout_n is less than a specified value to reduce a current imbalance Ib between the power supplies and to command a low value of Zeff_n when Iout_n is greater than the specified value to improve the regulation of Vout. The controller may command a low value of Zeff_n that is negative to partially offset Zext_n during steady-state to optimize regulation.

In an embodiment, the multi slope output impedance controller includes a coefficient generator controller (CGC) responsive to Isense_n, the switching frequency and voltage reference Vref_n to generate a current reference, a gain command, a filter command and a setpoint command. A current error amplifier compares Isense_n to the current reference to generate an error signal, a programmable gain amplifier responsive to the gain command commands the high and low values of Zeff_n amplifies the error signal, a filter responsive to the filter command filters the amplified error signal to limit a bandwidth of an output impedance control loop to be less than a bandwidth of the negative feedback loop that controls Vreg, and an amplifier responsive to the filtered amplified error signal and the setpoint command generates the setpoint voltage Vsetpoint_n such that when Isense_n is greater than the current reference the setpoint voltage Vsetpoint_n is reduced. The filter command is preferably generated such that the bandwidth of the output impedance control loop tracks the bandwidth of the negative feedback loop that controls Vreg up and down to better optimize performance over the range of supported load currents.

The power converters may be implemented as passively or synchronously rectified power converters. A passively rectified power converter is a single quadrant converter in which diodes may sink or source current but not both. At low levels of Iout_n, either during start-up or steady-state, this may manifest in one power converter supplying 100% of the load current with the other power converters turned off. Switching Zeff_n to a high value at low levels of Iout_n will force sharing of the load current among all of the power converters even at low levels of Iout_n and IL, preferably across the entire range of supported load currents. Switching Zeff_n to a low level when Iout_n is sufficiently large (and Vreg_n are sufficiently regulated), will improve the steady-state regulation. A synchronously rectified power converter is two quadrant converter in which active switches (synchronous rectifiers) may sink or source current. At low levels of Iout_n, either during start-up or steady-state, this may manifest in a circulating current Ic flowing among the power supplies. Switching Zeff_n to a high value at low levels of Iout_n will minimize Ic. Switching Zeff_n to a low level when Iout_n is sufficiently large (and Vreg_n are sufficiently regulated) that Ic is approximately zero (e.g., when Iout_n > 2*Ic no load), will improve the steady-state regulation. In the case of passive rectification, the current imbalance Ib is the difference between how much of the load current each supply provides. In the case of synchronous rectification, the current imbalance Ib is the circulating current Ic.

At start-up, each controller is responsive to a start sync command to implement a start-up procedure to generate the command Vx_n to ramp voltage Vc_n, hence the regulated voltage Vreg_n up from an initial start value (e.g. 0 Volts) to an initial value for the setpoint voltage Vsetpoint_n while commanding Zeff_n to move from the high value to the low value over a start-up period. Preferably the N power converters receive a common start sync command to synchronize the ramping up of Vc_n. The "ramp" may be linear, a sequence of steps or a higher order function. The transition of Zeff_n may be a step, sequence of steps, piece-wise linear or a linear or higher order function. Because start-up is controlled, the transition may be tied to time over the start-up period as a proxy for the value of Iout_n. Alternately, the controller could execute the transitions as a function of Isense_n as indicative of Iout_n.

At steady-state, command Vx_n is generated to control Vc_n to control regulation of Vout while commanding Zeff_n in response to Isense to move between the high and lows values as Isense changes such that Zeff_n decreases as Iout_n increases to force sharing and reduce current imbalance at low levels of load current and improve regulation at higher levels of load current. The transition of Zeff_n may be a step, sequence of steps, piece-wise linear or a linear or higher order function.

In an embodiment, the multi slope output impedance controller is configurable to implement both the start-up and steady-state procedures to reduce the current imbalance and maintain load regulation.

In an embodiment, the multi slope output impedance controller is configurable via a mode input to implement control either for a masterless configuration of N parallel-connected power converters to reduce current imbalance during start-up and steady-state or for a single power converter to optimize load regulation over the range of supported load currents.

These and other features and advantages of the invention will be apparent to those skilled in the art from the following detailed description of preferred embodiments, taken together with the accompanying drawings, in which:

## BRIEF DESCRIPTION OF THE DRAWINGS

FIG 1, as described above, illustrates a regulated power supply in which a masterless configuration of parallel-connected power supplies supply current to a common load;

FIG. 2, as described above, illustrates a pair of parallel-connected power supplies in which each power supply includes a power converter, a negative feedback loop to maintain a fixed output impedance to improve regulation and an external impedance connected to the load terminal;

FIG. 3, as described above, is a plot of the output voltage Vout versus load current Iload illustrating a common droop share characteristic to facilitate sharing of the load current among the parallel-connected power supplies;

FIG. 4, as described above, is a plot illustrating a circulating current Ic between the actively-switched power converters during start-up in which the power converter is actively switched;

FIG. 5, as described above, is a plot illustrating a circulating current Ic between the actively-switched power converters during steady-state;

FIG. 6 illustrates an embodiment of the invention in which each power supply includes a power converter, a negative feedback loop to control a variable output impedance to reduce a current imbalance between the power supplies and improve steady-state regulation;

FIG. 7 is a plot of multiple load regulation slopes in a V/I plane indicative of different effective output impedances;

FIG. 8 illustrates an embodiment of a multi-slope output impedance controller to control the variable output impedance;

FIG. 9 is a plot illustrating a circulating current Ic between the actively-switched power converters during start-up in which the output impedance is varied between high and low levels over a start-up period to suppress Ic initially and then improve regulation;

FIG. 10 is a plot illustrating a circulating current Ic between the actively-switched power converters during steady-state in which the output impedance is varied between high and low levels as a function of output current to suppress Ic at low current levels and to improve regulation at high current levels;

FIG. 11 is a plot of output voltage Vout versus load current IL illustrating the capability to configure the multi slope output impedance controller to provide optimal regulation for a single power supply; and

FIG 12 is an embodiment of a flyback power converter with primary side regulation and passive rectification;

FIG. 13 is an embodiment of a flyback power converter with primary side regulation and synchronous rectification.

## DETAILED DESCRIPTION OF THE INVENTION

The present invention provides a multi slope output impedance controller capable of varying the effective impedance Zeff of a power converter to reduce a current imbalance between power supplies in a masterless configuration of N parallel-connected power supplies while maintaining load regulation during start-up and steady-state operation. Generally speaking, the controller commands a high value of Zeff_n when Iout_n is low to facilitate current sharing and reduce current imbalance Ib and commands a low value of Zeff_n when Iout_n is high to improve load regulation.

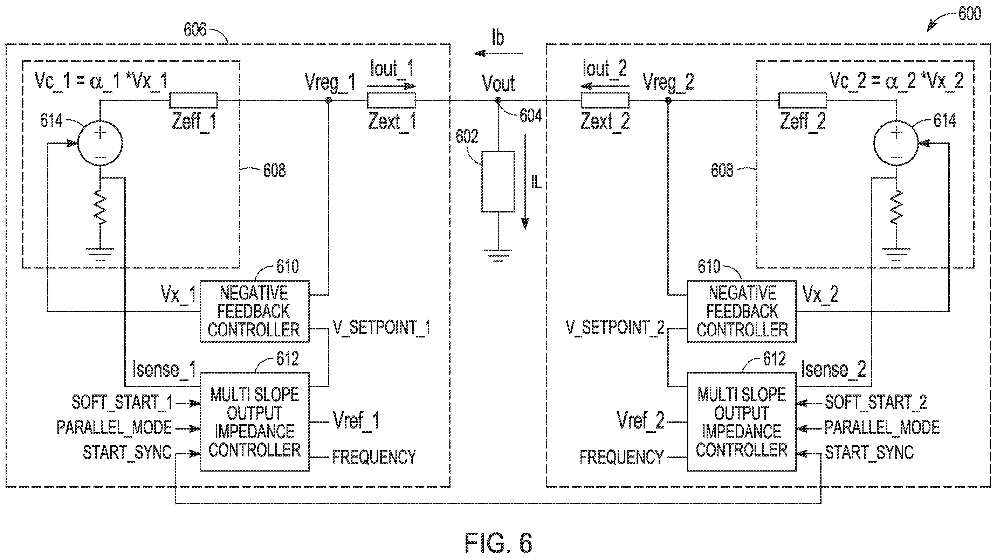

Referring now to Figure 6, an embodiment of regulated power supply **600** is configured to supply power (e.g, a load current IL at a regulated output voltage Vout) to a common load **602** connected at a load terminal **604.** Power supply **600** includes a plurality N of parallel-connected power supplies **606** in a masterless configuration configured to supply power in parallel to the load terminal **604.** Each power supply includes a power converter **608,** a negative feedback controller **610** to maintain regulation of the converters output voltage and a multi slope output impedance controller **612** to implement droop share to facilitate current sharing among the N power converters and to vary the effective output impedance Zeff_n to reduce an imbalance current and improve load regulation.

Each power converter **608** is depicted as a dependent source **614** in which a command voltage Vx_n is multiplied by a gain by a gain $\alpha$_n to produce a controllable voltage Vc_n and is characterized by an open-loop output impedance Z_OL. The existence of energy source Vin is presumed in a dependent source. Voltage Vc_n is applied across an effective output impedance Zeff_n to supply an output current Iout _n at an output that is coupled through an external output impedance Z_ext_n to the load terminal **604.** The total output impedance Zout_n = Zeff_n + Zext_n

Negative feedback controller **610** is configured to provide a negative feedback loop in which a regulated voltage Vreg_n at the output is compared to a setpoint voltage Vsetpoint_n to control command Vx_n to maintain regulation of Vreg_n and an output voltage Vout at the load terminal for varying load currents IL. A bandwidth of the negative feedback loop that controls output voltage Vreg_n may vary with load current, Vin, Vout and switching frequency, which can be either modeled or measured. In general, the bandwidth may drop as the load current is reduced.

The multi slope output impedance controller **612** is configured to sense a current Isense_n indicative of Iout_n to control Vsetpoint_n such that Vreg_n is reduced as Iout_n is increased to facilitate load current sharing among the plurality of power supplies (e.g. the common droop share), command a high value of Z_eff_n when Iout_n is less than a specified value to reduce a current imbalance Ib between the power supplies and to command a low value of Z_eff_n when Iout_n is greater than the specified value to improve the regulation of the output voltage Vout. The "specified value" may be an actual threshold value of Iout_n or may be a proxy such as a time indicating progression in a controlled start-up. As will be discussed later, the controller may receive a mode input to configure the power controller for a parallel-connected configuration such as shown in Figure 6 or for use as a single device, a start_sync input to synchronize start-up of the N power converters, a soft_start_1 input that receives an input to ramp up the converter output voltage in start-up and a frequency input responsive to a switching frequency of the power converter.

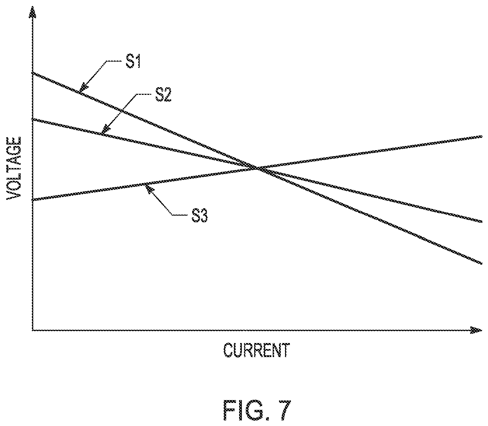

Figure 7 is plot of a voltage/current (V/I) plane with different Zeff values (positive, less positive and negative) that produce different voltage regulation *($\Delta v/\Delta i$)* which are the indicated slopes S1, S2, S3. Generally speaking S1 has a large negative slope (high positive Zeff) useful to facilitate droop share and to minimize the current imbalance when IL and Iout_n are small such as during the early stages of power supply start-up or for low load currents. S2 has a smaller negative slope (smaller positive Zeff) useful to maintain sharing as load regulation improves or load current increases. S3 may have a positive slope (negative Zeff) to counteract the external output impedance Zext to optimize load regulation at steady-state.

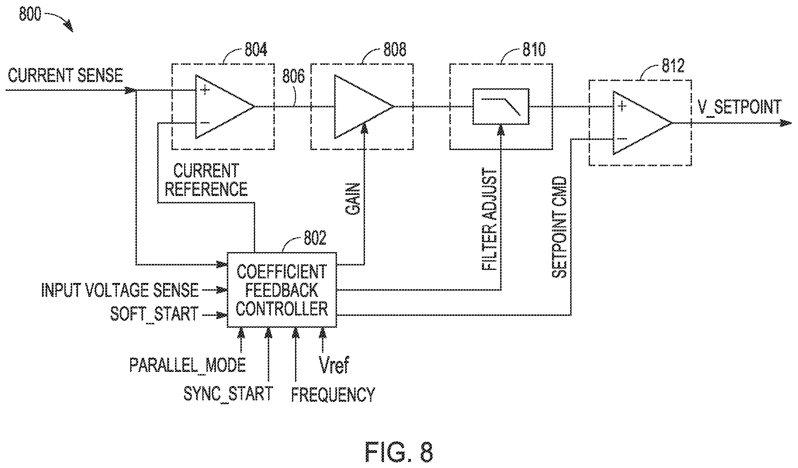

Referring now to Figure 8, an embodiment of a multi slope output impedance controller **800** includes a coefficient generator controller **802** that drives effective output impedance Zeff_n as a function of sensed current Isense_n, a sensed input voltage (from which Iout_n can be calculated) and a switching frequency from which Iout_n can be calculated. The controller generates varying Zeff_n as a function of the command setpoint of the controller which then develop multiple droop share slopes such as illustrated in Figure 7.

Controller **800** includes CGC **802** responsive to Isense_n, an input voltage sense, a switching frequency, and a voltage reference Vref_n to generate a current reference, a gain command, a filter command and a setpoint command. A current error amplifier **804** compares Isense_n to the current reference to generate an error signal **806**. A programmable gain amplifier **808** is responsive to the gain command to command the high and low values of the Zeff_n and amplify the error signal. In general, a higher gain corresponds to a larger positive Zeff. A negative gain can be used to set a negative Zeff. A filter **810** is responsive to the filter command to filter the amplified error signal to limit a bandwidth of an output impedance control loop to be less than a bandwidth of the negative feedback loop that controls Vre to achieve the desired response and stability of the output impedance controller. In a preferred embodiment, the CGC generates the filter command such that the bandwidth of the output impedance control loop tracks the bandwidth of the negative feedback loop up and down so that the impedance bandwidth is as high as possible without interfering with the output voltage bandwidth to optimize performance. An amplifier **812** responsive to the filtered amplified error signal and the setpoint command generates an offset to the setpoint voltage Vsetpoint_n such that when Isense_n is greater than the current reference the setpoint voltage Vsetpoint_n is reduced. The controller may be implemented with analog functions, digital hardware, software or a combination thereof.

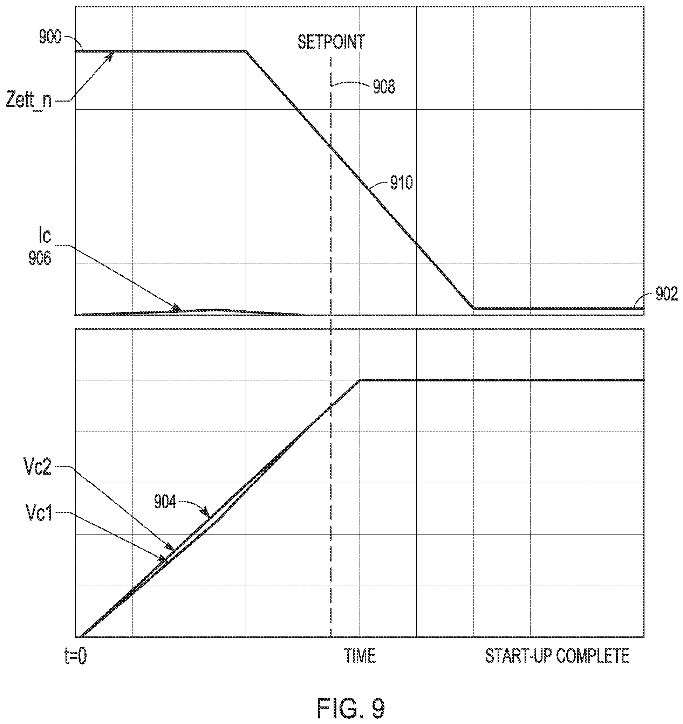

Referring now to Figure 9, each multi slope output impedance controller is responsive to a start sync command as shown in Figure 6 to implement a start-up procedure to generate the command Vx_n to ramp voltage Vc_n, hence the regulated voltage Vreg_n up from an initial start value to an initial value for the setpoint voltage Vsetpoint_n while commanding Zeff_n to move from a high value **900** to a low value **902** over a start-up period. The function that drives the ramp over the start-up period is applied to the Soft_Start_n input of the controller. This function could be linear, piecewise linear, a step function or a higher order function that starts at the initial value (e.g. 0 volts) and ends at the final setpoint voltage. As shown, the exemplary ramp function is linear. In a preferred embodiment, the Start_sync inputs to all of the controllers are tied together so that all of the power converters start the ramping up of the output voltage, which will reduce the difference between voltages Vc_n. For example, each power converter will switch an enable command high or low to indicate the power converter is ready. When the last one is enabled, all of the power converters initiate start-up.

At initiation and until all of the output voltages of the power converters are adequately regulated, the difference **904** in output voltages Vc_1 and Vc_2 can be significant and lead to a severe current imbalance. In a synchronously rectified configuration this will cause a circulating current Ic **906** to flow between the power converters. Accordingly, the controller adjusts the programmable gain to a very high level to set the high value **900** for Zeff to drive Ic **906** to close to zero amps. As start-up progresses, Iout_n increases and exceeds a setpoint **908**. This may be determined by monitoring Isense_n directly or via design of the controlled start-up procedure. Knowing the ramp function, Iout_n can be calculated with sufficient accuracy and reliability over the start-up period and the Iout_n setpoint mapped to a progression or specific time in the start-up procedure. Preferably the setpoint corresponds to a value of Iout_n > 2 * Ic under no load conditions. Once this condition is satisfied, Zeff can be switched low without concern of inducing the circulating current Ic.

In this particular example, Zeff_n does not switch directly from its high to low values but follows a transition **910** from the high to low values that spans setpoint **908**. The transition between the high and low values of Zeff_n can be a single step, a sequence of steps, a linear transition or a linear or higher order function depending upon the particular implementation. When start-up is complete, each power converter will supply a nominal Iout_n value, for example, sufficient to supply load current at the middle of its range to enter steady-state. The output voltages of each of the converters are fairly well regulated and the current levels are within the supported range. At this point, the controller adjusts the programmable gain to a low level, and perhaps a negative value, to set the low value **902** for Zeff to improve, or optimize, load regulation during steady-state operations. A negative Zeff_n would partially offset the positive value of Zeff_n producing a smaller positive output impedance Zout_n still sufficient to facilitate sharing of the load current with optimum load regulation.

In the case of passively rectified power converters, the same procedure of setting Zeff_n to a high value at the onset of start-up and switching to a low value at the completion of start-up is followed. The desirable effect of having a high value of Zeff_n at the onset is to implement droop share at low levels of Iout_n so that the power converters start to share load current much earlier in the start-up procedure, which improves the overall reliability and efficiency of the power supply. A low value of Zeff_n at the completion of start-up improves load regulation for steady-state operation.

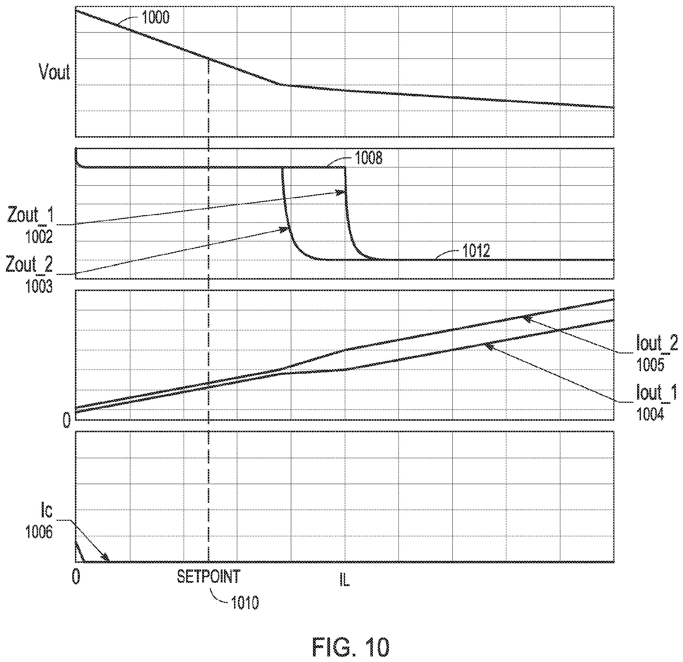

Referring now to Figure 10, each multi slope output impedance controller is responsive to sense current Isense_n as an indicator of Iout_n and load current IL during steady-state. An output voltage Vout **1000** across the load, total output impedance Zout_1 **1002** and Zout_2 **1003**, output currents Iout_1 **1004** and Iout_2 **1005** and a circulating current **1006** are plotted versus a level of load current IL. For synchronous rectification, when Iout < 2 * IC under no load then any difference in Vc_1 and Vc_2 will produce circulating current **1006**. In steady-state this difference will be much smaller than during start-up, hence Ic will be much smaller but still undesirable. Therefore, the controller commands a high value **1008** for Zeff_1 and Zeff_2, hence Zout_1 and Zout_2, to minimize circulating current Ic for small load currents. Load regulation may be sacrificed to eliminate Ic but remains within a required regulation. For load currents above a setpoint **1010**, the controller commands a low value **1012** for Zeff_1 and Zeff_2, hence Zout_1 and Zout_2, to improve load regulation. As shown the slope of the load line **1000** flattens when Zout is switched low indicating improved load regulation. The high values for Zeff_n may be negative to partially offset the positive value of Zext_n to optimize regulation. The transition between the high and low values of Zeff_n can be a single step, a sequence of steps, a linear transition or a linear or higher order function depending upon the particular implementation. As shown, the power converter that is contributing the most current Iout_n, here converter 2, will switch low first. In the synchronous rectifier case, the setpoint can be set at Iout = 2*IC no load for each power converter. Below that point, Zeff_n should remain high to minimize Ic. Above that point, Zeff_n can be switched low as Ic is approximately zero regardless. The low value of Zeff_n must be sufficient to ensure sharing within the known potential variation of the Vc_n voltages of the converters at a known operating point.

The multi slope output impedance controller achieves better overall performance than the single slope output impedance controller, which must pick a fixed Zeff to support both start-up and steady-state operation of the power converters. The multi slope output impedance controller commands a high value of Zeff, higher than the fixed Zeff of the prior art, at low levels of Iout, which has the desirable effect of reducing the current imbalance between the power supplies. In the case of passively rectified converters, this has the desirable effect of forcing the converters to share the load current at lower levels during both start-up and steady-state. In the case of synchronously rectified converters, this has the desirable effect of essentially eliminating circulating current during both start-up and steady-state. In all cases, in the normal operating range of load currents at steady-steady state, the controller commands a low value of Zeff, lower than the fixed Zeff of the prior art, which improves the load regulation. The controller may even drive Zeff negative to optimize load regulation.

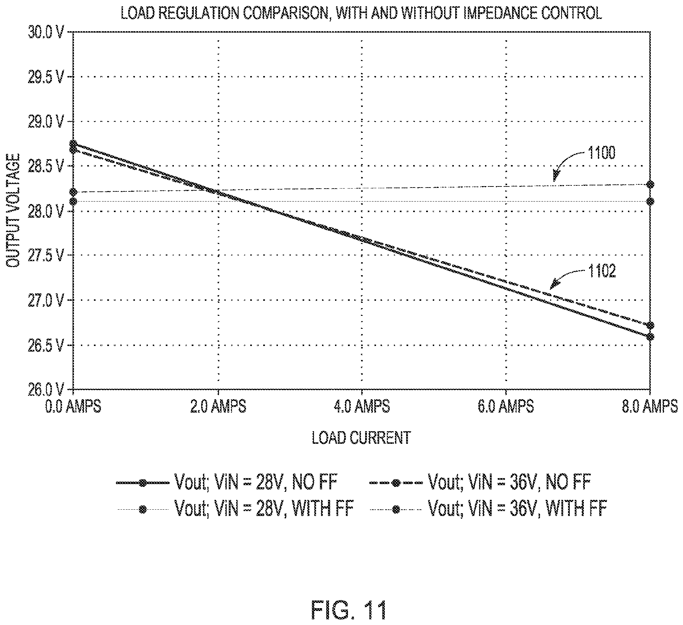

Referring back to Figure 6, multi slope output impedance controller includes a mode input that receives a command e.g., 0/1, that tells the controller whether it is being used in masterless configuration of N parallel-connected power converters or with a single power converter. For the former, the controller implements the start-up and steady-state procedures to set the high and low levels of Zeff_n to reduce the current imbalance and improve load regulation while facilitating sharing of the load current among all of the power converters. For the latter, the controller commands a negative gain for the programmable gain amplifier to set Zeff at a negative value to substantially offset the positive value of Zext to optimize regulation of the output voltage Vout. As shown in Figure 11, a load line **1100** in which negative Zeff offsets positive Zest is approximately flat indicating optimized load regulation over the supported range of load current. By comparison, a load line **1102** in which Zeff was a positive value selected to enforce sharing among N parallel-connected power has a distinct negative slope indicating sub-optimal load regulation. The point being that the multi slope output impedance controller can be used for either the N parallel-connected power converters or a single power converter without changing the fundamental control algorithm. The controller may be used in any type of converter topology in switching or linear modes.

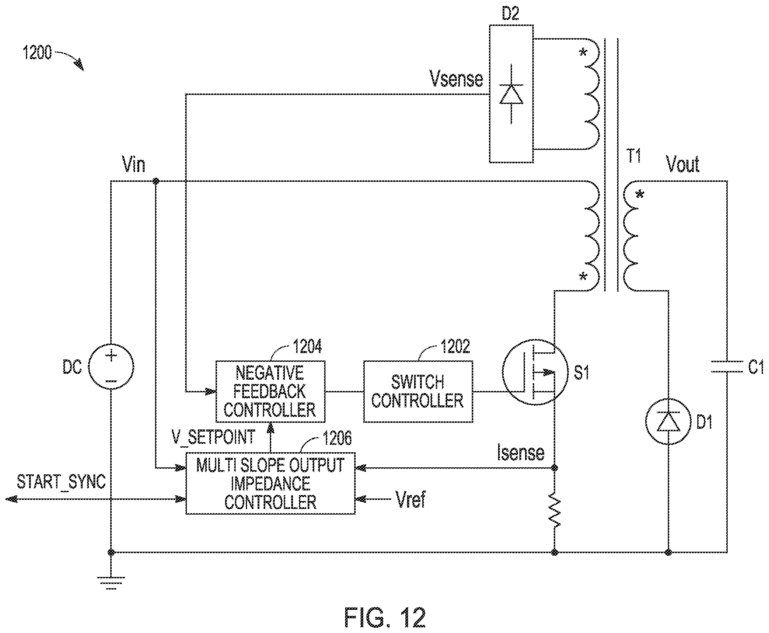

Figure 12 illustrates an embodiment of a Flyback converter **1200** with primary side regulation and passive rectification. The flyback converter stores energy in transformer T1 during the time that active switch S1 is commanded on by the switch controller **1202**. Due to the dot polarity of the windings of T1 when S1 is on both the output voltage Vout across a load C1 and sense Vsense winding rectifiers (D1 and D2 respectively) are reverse biased and thus conduct no energy. The converter's Vout is equivalent to the controllable voltage Vc_n in the dependent source model. When S1 is commanded off by the switch controller the winding voltages are reversed due to the stored energy in T1. In this state the rectifiers D1 and D2 conduct. Due to the dot polarity the voltage Vsense will be proportional to Vout. For example, if the turns ratio of T1 was unity for the Vout and Vsense windings, Vsense would be equal to Vout. A negative feedback controller **1204** senses the voltage Vsense and adjusts the duty cycle of the switch controller **1202** to regulate the converter to the desired setpoint. A multi slope output impedance controller **1206** controls the setpoint voltage Vsetpoint to vary effective output impedance Zeff as previously discussed.

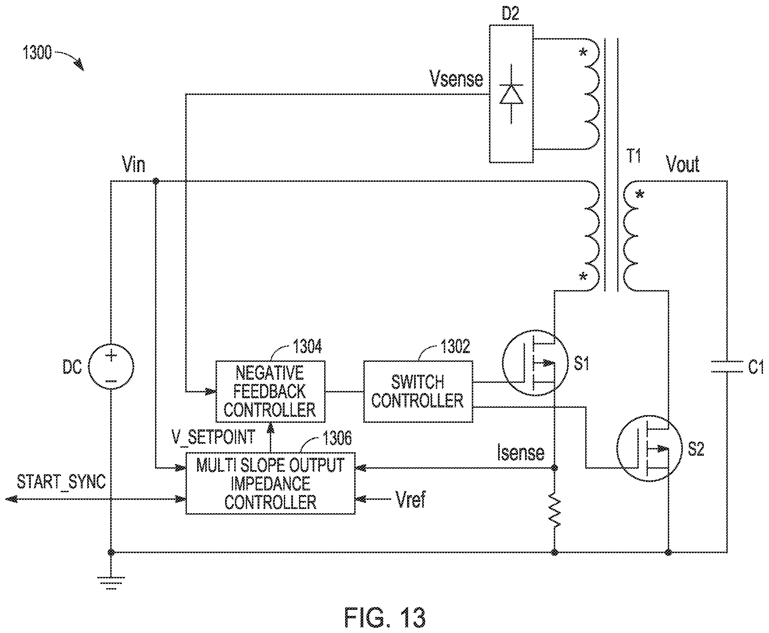

Figure 13 shows a Flyback converter **1300** with primary side regulation with synchronous rectification. In this case the basic operation is identical but the passive rectifier (D1) is replaced with an active switch (S2) and a switch controller **1302** is modified to provide a control signal to S2 that is inverted from the signal driving S1. Due to the addition of the active rectifier, the converter **1300** of figure 13 can both sink and source current. A negative feedback controller **1304** and multi slope output impedance controller **1306** function as previous described to control the setpoint voltage Vsetpoint to vary effective output impedance Zeff and regulate the converter to the desired setpoint.

Further variations and modifications are possible within the scope of the appended claims.

## Claims

1. A regulated power supply (600) configured to supply power to a common load (602) connected at a load terminal (604), said power supply (600) comprising: a plurality N of parallel-connected power supplies (606) in a masterless configuration configured to supply power to the load terminal (604), each said power supply (606) comprising,

    a power converter (608) configured to respond to a command Vx_n to generate a controllable voltage Vc_n across an effective output impedance Zeff_n to supply an output current Iout_n at an output that is coupled through an external output impedance Zext_n to the load terminal (604);
    a negative feedback controller (610, 1204, 1304) configured to provide a negative feedback loop in which a regulated voltage Vreg_n at the output is compared to a setpoint voltage Vsetpoint_n to control command Vx_n to maintain regulation of Vreg_n and an output voltage Vout at the load terminal (604) for varying load currents IL; and
    a multi slope output impedance controller (612, 800, 1206, 1306) configured to respond to a current Isense_n indicative of Iout_n to control Vsetpoint_n such that Vreg_n is reduced as Iout_n is increased to facilitate load current sharing among the plurality of power supplies (606), command a high value of Zeff_n when Iout_n is less than a specified value to reduce a current imbalance Ib between the power supplies (606) and to command a low value of Zeff_n when Iout_n is greater than the specified value to improve the regulation of the output voltage Vout, wherein each said multi slope output impedance controller (612, 800, 1206, 1306) is configured to implement a start-up procedure and a steady-state procedure, wherein:

during the start-up procedure, the controller (612, 800, 1206, 1306) is configured to respond to a start sync command to generate the command Vx_n to ramp voltage Vc_n, hence the regulated voltage Vreg_n up from zero volts to the setpoint voltage Vsetpoint_n, while commanding Zeff_n to move from a start-up high value to reduce the current imbalance Ib to a start-up low value to improve load regulation over a start-up period; and

during the steady-state procedure, the controller is configured to generate command Vx_n to control regulation of Vout while commanding Zeff_n to move between steady-state high and low values as Isense_n changes such that Zeff_n decreases as Iout_n increases to reduce current imbalance Ib when Iout_n is low and to improve load regulation when Iout_n is high.

2. The regulated power supply (600) of claim 1, wherein the multi slope output impedance controller (612, 800, 1206, 1306) comprises:

a coefficient generator controller (802), CGC, configured to respond to Isense_n and a voltage reference Vref_n to generate a current reference, a gain command, a filter command and a setpoint command;

a current error amplifier (804) configured to compare Isense_n to the current reference to generate an error signal (806);

a programmable gain amplifier (808) configured to respond to the gain command to command the high and low values of Zeff_n and amplify the error signal (806);

a filter (810) configured to respond to the filter command to filter the amplified error signal (806) to limit a bandwidth of an output impedance control loop to be less than a bandwidth of the negative feedback loop that controls Vreg; and

an amplifier (812) configured to respond to the filtered amplified error signal (806) and the setpoint command to generate the setpoint voltage Vsetpoint_n such that when Isense_n is greater than the current reference the setpoint voltage Vsetpoint_n is reduced.

3. The regulated power supply (600) of claim 2, wherein the CGC (802) is configured to configure the filter (810) via the filter command such that the bandwidth of the output impedance control loop tracks the bandwidth of the negative feedback loop that controls Vreg.

4. The regulated power supply (600) of claim 2, wherein the CGC (802) is configurable during steady-state to generate the gain command to set a negative gain, hence a negative value of Zeff_n as the low value to partially offset a positive value of Zext_n to reduce a total positive output impedance Zout_n to improve regulation while facilitating load current sharing among the plurality of power supplies (606).

5. The regulated power supply (600) of claim 1, wherein each power converter (608) is configured to be passively rectified to exclusively-or (XOR) sink or source Iout_n to the load terminal (604), wherein the controller is configured to command the high and low values of Zeff_n such that all N PCs share in the sinking or sourcing of the load current over a specified range of supported load currents.

6. The regulated power supply (600) of claim 1, wherein each power converter (608) is configured to be synchronously rectified to sink and source Iout_n to the load terminal (604), wherein the controller is configured to command the low value of Zeff_n when Iout > 2*IC under no load such that IC under load is approximately zero where IC is a circulating current between the power supplies (606).

7. The regulated power supply (600) of claim 1, wherein each said multi slope output impedance controller (612, 800, 1206, 1306) is configured respond to a start sync command to implement a start-up procedure to generate the command Vx_n to ramp voltage Vc_n, hence the regulated voltage Vreg_n up from an initial start value to an initial value for the setpoint voltage Vsetpoint_n while commanding Zeff_n to move from the high value to the low value over a start-up period.

8. The regulated power supply (600) of claim 7, wherein all of the multi slope output impedance controllers (612, 800, 1206, 1306) are configured to receive a common start sync command to initialize the start-up procedure.

9. The regulated power supply (600) of claim 7, wherein each said multi slope output impedance controller (612, 800, 1206, 1306) is configured to command the high value of Zeff_n to facilitate load current sharing and reduce current imbalance Ib at the onset of the start-up procedure and to command the low value of Zeff_n, which is set at a nominal value for steady-state operation, once Iout_n is of sufficient magnitude to facilitate load current sharing at the low value of Zeff_n.

10. The regulated power supply (600) of claim 1, wherein each said multi slope output impedance controller (612, 800, 1206, 1306) is configured to implement a steady-state procedure in which command Vx_n is generated to control Vc_n to control regulation of Vout while commanding Zeff_n in response to Isense_n to move between the high and lows values as Isense_n changes such that Zeff_n decreases as Iout_n increases.

11. The regulated power supply (600) of claim 10, wherein the output impedance controller (612, 800, 1206, 1306) is configurable during steady-state to set a negative value for Zeff_n to partially offset a positive value for Zext_n to reduce a total positive output impedance Zout to improve regulation while maintain sharing of the load current among the power supplies (606).

12. The regulated power supply (600) of claim 1, wherein the multi slope output impedance controller (612, 800, 1206, 1306) is configured to respond to a mode input to select single or multiple power converter configurations,

wherein in the multiple configuration of N > 1, the controller (612, 800, 1206, 1306) is configured to reduce the setpoint voltage Vsetpoint_n as output current Iout_n increases to facilitate load current sharing among the plurality of power supplies (606) and to command the high value of Zeff_n for Iout_n less than the specified value to reduce the current imbalance Ib and to command the low value of Zeff_n for Iout_n greater than the specified value to improve load regulation;

wherein in the single configuration of N =1, the controller is configured to set a negative value for Zeff_n to substantially offset a positive value of Zext_n to increase the setpoint voltage Vsetpoint_n as output current Iout_n increases to improve load regulation.

13. The regulated power supply (600) of claim 12, wherein in the multiple configuration of N > 1, the controller (612, 800, 1206, 1306) is configured to implement a start-up procedure and a steady-state procedure,

wherein during the start-up procedure, the controller (612, 800, 1206, 1306) is configured to respond to a start sync command to generate the command Vx_n to ramp voltage Vc_n, hence the regulated voltage Vreg_n up from zero volts to the setpoint voltage Vsetpoint_n while commanding Zeff_n to move from a start-up high value to reduce the current imbalance Ib to a start-up low value to improve load regulation over a start-up period; and

wherein during the steady-state procedure, the controller is configured to generate command Vx_n to control regulation of Vout while commanding Zeff_n in response to Isense_n to move between steady-state high and low values as Isense_n changes such that Zeff_n decreases as Iout_n increases to reduce current imbalance Ib when Iout_n is low and to improve load regulation when Iout_n is high.

**Patentansprüche**

1. Geregelte Stromversorgung (600), die dafür konfiguriert ist, eine gemeinsame Last (602) mit Strom zu versorgen, die an einen Lastanschluss (604) angeschlossen ist, wobei die Stromversorgung (600) Folgendes umfasst:

eine Vielzahl N von parallelgeschalteten Stromversorgungen (606) in einer masterlosen Konfiguration, die dafür konfiguriert sind, den Lastanschluss (604) mit Strom zu versorgen, wobei jede Stromversorgung (606) Folgendes umfasst,

einen Leistungswandler (608), der dafür konfiguriert ist, auf einen Befehl Vx_n zu reagieren, um eine steuerbare Spannung Vc_n über einer effektiven Ausgangsimpedanz Zeff_n zu erzeugen, um einen Ausgangsstrom Iout_n an einem Ausgang bereitzustellen, der durch eine externe Ausgangsimpedanz Zext_n mit dem Lastanschluss (604) gekoppelt ist;

einen negativen Rückkopplungsregler (610, 1204, 1304), der dafür konfiguriert ist, eine negative Rückkopplungsschleife bereitzustellen, in der eine geregelte Spannung Vreg_n am Ausgang mit einer Sollwertspannung Vsetpoint_n verglichen wird, um den Befehl Vx_n zu steuern, um die Regelung von Vreg_n und einer Ausgangsspannung Vout am Lastanschluss (604) für variierende Lastströme IL aufrechtzuerhalten; und

einen Ausgangsimpedanzregler mehrerer Neigungen (612, 800, 1206, 1306), der dafür konfiguriert ist, auf einen Strom Isense_n, der für Iout_n bezeichnend ist, zu reagieren, um Vsetpoint_n derart zu steuern, dass Vreg_n reduziert wird, wenn Iout_n ansteigt, um eine Laststromaufteilung unter der Vielzahl von Stromversorgungen (606) zu erleichtern, einen hohen Wert von Zeff_n zu befehlen, wenn Iout_n kleiner als ein spezifizierter Wert ist, um ein Stromungleichgewicht Ib zwischen den Stromversorgungen (606) zu reduzieren, und einen niedrigen Wert von Zeff_n zu befehlen, wenn Iout_n größer als der spezifizierte Wert ist, um die Regelung der Ausgangsspannung Vout zu verbessern, wobei jeder besagte Ausgangsimpedanzregler mehrerer Neigungen (612, 800, 1206, 1306) dafür konfiguriert ist, einen Anlaufvorgang und einen stationären Vorgang zu implementieren, wobei:

während des Anlaufvorgangs der Regler (612, 800, 1206, 1306) dafür konfiguriert ist, auf einen Start-Synchronisations-Befehl zu reagieren, um den Befehl Vx_n zu erzeugen, um die Spannung Vc_n und somit die geregelte Spannung Vreg_n von null Volt auf die Sollwertspannung Vsetpoint_n hochzufahren, während befohlen wird, dass sich Zeff_n von einem hohen Anlaufwert, um das Stromungleichgewicht Ib zu reduzieren, zu einem niedrigen Anlaufwert bewegt, um die Lastregelung über eine Anlaufphase hinweg zu verbessern; und während des stationären Vorgangs der Regler dafür konfiguriert ist, den Befehl Vx_n zu erzeugen, um die Regelung von Vout zu steuern, während befohlen wird, dass sich Zeff_n zwischen hohen und niedrigen Werten des stationären Zustands bewegt, wenn sich Isense_n ändert, so dass Zeff_n abnimmt, wenn Iout_n ansteigt, um das Stromungleichgewicht Ib zu reduzieren, wenn Iout_n niedrig ist, und um die Lastregelung zu verbessern, wenn Iout_n hoch ist.

2. Geregelte Stromversorgung (600) nach Anspruch 1, wobei der Ausgangsimpedanzregler mehrerer Neigungen (612, 800, 1206, 1306) Folgendes umfasst:

einen Koeffizientengenerator-Regler (802) (Coefficient Generator Controller, CGC), der dafür konfiguriert ist, auf Isense_n und eine Spannungsreferenz Vref_n zu reagieren, um eine Stromreferenz, einen Verstärkungsbefehl, einen Filterbefehl und einen Sollwertbefehl zu erzeugen;
einen Stromfehlerverstärker (804), der dafür konfiguriert ist, Isense_n mit der Stromreferenz zu vergleichen, um ein Fehlersignal (806) zu erzeugen;
einen Verstärker mit programmierbarer Verstärkung (808), der dafür konfiguriert ist, auf den Verstärkungsbefehl zu reagieren, um die hohen und niedrigen Werte von Zeff_n zu befehlen und das Fehlersignal (806) zu verstärken;
ein Filter (810), das dafür konfiguriert ist, auf den Filterbefehl zu reagieren, um das verstärkte Fehlersignal (806) zu filtern, um eine Bandbreite eines Ausgangsimpedanz-Regelkreises so zu begrenzen, dass sie kleiner als eine Bandbreite der negativen Rückkopplungsschleife ist, die Vreg steuert; und
einen Verstärker (812), der dafür konfiguriert ist, auf das gefilterte verstärkte Fehlersignal (806) und den Sollwertbefehl zu reagieren, um die Sollwertspannung Vsetpoint_n derart zu erzeugen, dass die Sollwertspannung Vsetpoint_n reduziert wird, wenn Isense_n größer als die Stromreferenz ist.

3. Geregelte Stromversorgung (600) nach Anspruch 2, wobei der CGC (802) dafür konfiguriert ist, das Filter (810) über den Filterbefehl derart zu konfigurieren, dass die Bandbreite des Ausgangsimpedanz-Regelkreises der Bandbreite der negativen Rückkopplungsschleife, die Vreg steuert, nachgeführt wird.

4. Geregelte Stromversorgung (600) nach Anspruch 2, wobei der CGC (802) während des stationären Zustands so konfigurierbar ist, dass er den Verstärkungsbefehl erzeugt, um eine negative Verstärkung, und somit einen negativen Wert von Zeff_n, als den niedrigen Wert einzustellen, um einen positiven Wert von Zext_n teilweise auszugleichen, um eine positive Gesamtausgangsimpedanz Zout_n zu reduzieren, um die Regelung zu verbessern, während die Laststromaufteilung unter der Vielzahl von Stromversorgungen (606) erleichtert wird.

5. Geregelte Stromversorgung (600) nach Anspruch 1, wobei jeder Leistungswandler (608) dafür konfiguriert ist, passiv gleichgerichtet zu werden, um Iout_n an den/vom Lastanschluss (604) exklusiv-oder (XOR) abzuleiten (sink) oder zu liefern (source), wobei der Regler dafür konfiguriert ist, die hohen und niedrigen Werte von Zeff_n derart zu befehlen, dass sich alle N Leistungswandler an der Ableitung oder Lieferung des Laststroms über einen spezifizierten Bereich von unterstützten Lastströmen beteiligen.

6. Geregelte Stromversorgung (600) nach Anspruch 1, wobei jeder Leistungswandler (608) dafür konfiguriert ist, synchron gleichgerichtet zu werden, um Iout_n am Lastanschluss (604) abzuleiten und bereitzustellen, wobei der Regler dafür konfiguriert ist, den niedrigen Wert von Zeff_n zu befehlen, wenn Iout > 2*IC unter Nulllast ist, so dass IC unter Last ungefähr null ist, wobei IC ein zirkulierender Strom zwischen den Stromversorgungen (606) ist.

7. Geregelte Stromversorgung (600) nach Anspruch 1, wobei jeder besagte Ausgangsimpedanzregler mehrerer Neigungen (612, 800, 1206, 1306) dafür konfiguriert ist, auf einen Start-Synchronisations-Befehl zu reagieren, um einen Anlaufvorgang zu implementieren, um den Befehl Vx_n zu erzeugen, um die Spannung Vc_n und somit die geregelte Spannung Vreg_n von einem anfänglichen Startwert auf einen Anfangswert für die Sollwertspannung Vsetpoint_n hochzufahren, während befohlen wird, dass sich Zeff_n über eine Anlaufphase von dem hohen Wert zu dem niedrigen Wert bewegt.

8. Geregelte Stromversorgung (600) nach Anspruch 7, wobei alle Ausgangsimpedanzregler mehrerer Neigungen (612, 800, 1206, 1306) dafür konfiguriert sind, einen gemeinsamen Start-Synchronisations-Befehl zu empfangen, um den Anlaufvorgang zu initialisieren.

9. Geregelte Stromversorgung (600) nach Anspruch 7, wobei jeder besagte Ausgangsimpedanzregler mehrerer Neigungen (612, 800, 1206, 1306) dafür konfiguriert ist, zu Beginn des Anlaufvorgangs den hohen Wert von Zeff_n zu befehlen, um die Laststromaufteilung zu erleichtern und das Stromungleichgewicht Ib zu reduzieren, und den niedrigen Wert von Zeff_n, der auf einen Nennwert für den stationären Betrieb eingestellt ist, zu befehlen, sobald Iout_n von ausreichender Größe ist, um die Laststromaufteilung bei dem niedrigen Wert von Zeff_n zu erleichtern.

10. Geregelte Stromversorgung (600) nach Anspruch 1, wobei jeder besagte Ausgangsimpedanzregler mehrerer Neigungen (612, 800, 1206, 1306) dafür konfiguriert ist, einen stationären Vorgang zu implementieren, bei dem der Befehl Vx_n erzeugt wird, um Vc_n zu steuern, um die Regelung von Vout zu steuern, während in Reaktion auf Isense_n befohlen wird, dass sich Zeff_n zwischen den hohen und niedrigen Werten bewegt, wenn sich Isense_n ändert, so dass Zeff_n abnimmt, wenn Iout_n ansteigt.

11. Geregelte Stromversorgung (600) nach Anspruch 10, wobei der Ausgangsimpedanzregler (612, 800, 1206, 1306) während des stationären Zustands so konfigurierbar ist, dass er einen negativen Wert für Zeff_n einstellt, um einen positiven Wert für Zext_n teilweise auszugleichen, um eine positive Gesamtausgangsimpedanz Zout zu reduzieren, um die Regelung zu verbessern, während die Aufteilung des Laststroms unter den Stromversorgungen (606) beibehalten wird.

12. Geregelte Stromversorgung (600) nach Anspruch 1, wobei der Ausgangsimpedanzregler mehrerer Neigungen (612, 800, 1206, 1306) dafür konfiguriert ist, auf einen Moduseingang zu reagieren, um Konfigurationen mit einem einzelnen oder mehreren Leistungswandlern auszuwählen,

wobei in der Mehrfachkonfiguration von N > 1 der Regler (612, 800, 1206, 1306) dafür konfiguriert ist, die Sollwertspannung Vsetpoint_n zu reduzieren, wenn der Ausgangsstrom Iout_n ansteigt, um die Laststromaufteilung unter der Vielzahl von Stromversorgungen (606) zu erleichtern, und den hohen Wert von Zeff_n für Iout_n, der kleiner als der spezifizierte Wert ist, zu befehlen, um das Stromungleichgewicht Ib zu reduzieren, und den niedrigen Wert von Zeff_n für Iout_n, der größer als der spezifizierte Wert ist, zu befehlen, um die Lastregelung zu verbessern;

wobei in der Einzelkonfiguration von N = 1 der Regler dafür konfiguriert ist, einen negativen Wert für Zeff_n einzustellen, um einen positiven Wert von Zext_n im Wesentlichen auszugleichen, um die Sollwertspannung Vsetpoint_n zu erhöhen, wenn der Ausgangsstrom Iout_n ansteigt, um die Lastregelung zu verbessern.

13. Geregelte Stromversorgung (600) nach Anspruch 12, wobei in der Mehrfachkonfiguration von N > 1 der Regler (612, 800, 1206, 1306) dafür konfiguriert ist, einen Anlaufvorgang und einen stationären Vorgang zu implementieren,

wobei während des Anlaufvorgangs der Regler (612, 800, 1206, 1306) dafür konfiguriert ist, auf einen Start-Synchronisations-Befehl zu reagieren, um den Befehl Vx_n zu erzeugen, um die Spannung Vc_n und somit die geregelte Spannung Vreg_n von null Volt auf die Sollwertspannung Vsetpoint_n hochzufahren, während befohlen wird, dass sich Zeff_n über eine Anlaufphase von einem hohen Anlaufwert, um das Stromungleichgewicht Ib zu reduzieren, zu einem niedrigen Anlaufwert bewegt, um die Lastregelung zu verbessern; und

wobei während des stationären Vorgangs der Regler dafür konfiguriert ist, den Befehl Vx_n zu erzeugen, um die Regelung von Vout zu steuern, während in Reaktion auf Isense_n befohlen wird, dass sich Zeff_n zwischen hohen und niedrigen Werten des stationären Zustands bewegt, wenn sich Isense_n ändert, so dass Zeff_n abnimmt, wenn Iout_n ansteigt, um das Stromungleichgewicht Ib zu reduzieren, wenn Iout_n niedrig ist, und um die Lastregelung zu verbessern, wenn Iout_n hoch ist.

## Revendications

1. Alimentation électrique régulée (600) configurée pour alimenter une charge commune (602) connectée à une borne de charge (604), ladite alimentation électrique (600) comprenant :

une pluralité N d'alimentations électriques (606) connectées en parallèle dans une configuration sans maître, configurées pour alimenter la borne de charge (604), chaque ladite alimentation électrique (606) comprenant,

un convertisseur de puissance (608) configuré pour répondre à une commande Vx_n afin de générer une tension contrôlable Vc_n à travers une impédance de sortie effective Zeff_n pour fournir un courant de sortie Iout_n à une sortie couplée par une impédance de sortie externe Zext_n à la borne de charge (604) ; un régulateur à rétroaction négative (610, 1204, 1304) configuré pour fournir une boucle de rétroaction négative dans laquelle une tension régulée Vreg_n à la sortie est comparée à une tension de consigne Vsetpoint_n pour contrôler la commande Vx_n afin de maintenir la régulation de Vreg_n et une tension de sortie Vout à la borne de charge (604) pour des courants de charge IL variables ; et

un régulateur d'impédance de sortie à pentes multiples (612, 800, 1206, 1306) configuré pour répondre à un courant Isense_n indicatif de Iout_n afin de contrôler Vsetpoint_n de sorte que Vreg_n soit réduit lorsque Iout_n augmente pour faciliter le partage du courant de charge entre les alimentations électriques (606), commander une valeur élevée de Zeff_n lorsque Iout_n est inférieur à une valeur spécifiée pour réduire un déséquilibre de courant Ib entre les alimentations électriques (606) et commander une valeur faible de Zeff_n lorsque Iout_n est supérieur à la valeur spécifiée pour améliorer la régulation de la tension de sortie Vout, dans laquelle chaque ledit régulateur d'impédance de sortie à pentes multiples (612, 800, 1206, 1306) est configuré pour mettre en œuvre une procédure de démarrage et une procédure en régime permanent, dans laquelle :

lors de la procédure de démarrage, le régulateur (612, 800, 1206, 1306) est configuré pour répondre à une commande de synchronisation de démarrage afin de générer la commande Vx_n pour faire monter la tension Vc_n, la tension régulée Vreg_n, passe donc de zéro volt à la tension de consigne Vsetpoint_n, tout en commandant Zeff_n de passer d'une valeur élevée de démarrage pour réduire le déséquilibre de courant Ib à une valeur faible de démarrage pour améliorer la régulation de charge pendant une période de démarrage ; et

pendant la procédure en régime permanent, le régulateur est configuré pour générer la commande Vx_n afin de contrôler la régulation de Vout tout en commandant Zeff_n de passer entre des valeurs élevées et faibles en régime permanent lorsque Isense_n change, de sorte que Zeff_n diminue lorsque Iout_n augmente afin de réduire le déséquilibre de courant Ib lorsque Iout_n est faible et d'améliorer la régulation de charge lorsque Iout_n est élevé.

2. Alimentation électrique régulée (600) de la revendication 1, dans laquelle le régulateur d'impédance de sortie à pentes multiples (612, 800, 1206, 1306) comprend :

un régulateur de générateur de coefficient (802), CGC, configuré pour répondre à Isense_n et à une référence de tension Vref_n pour générer une référence de courant, une commande de gain, une commande de filtrage et une commande de consigne ;
un amplificateur d'erreur de courant (804) configuré pour comparer Isense_n à la référence de courant afin de générer un signal d'erreur (806) ;
un amplificateur à gain programmable (808) configuré pour répondre à la commande de gain afin de commander les valeurs élevées et faibles de Zeff_n et d'amplifier le signal d'erreur (806) ;
un filtre (810) configuré pour répondre à la commande de filtrage afin de filtrer le signal d'erreur amplifié (806) pour limiter une bande passante d'une boucle de contrôle d'impédance de sortie à une valeur inférieure à une bande passante de la boucle de rétroaction négative qui contrôle Vreg ; et
un amplificateur (812) configuré pour répondre au signal d'erreur amplifié filtré (806) et à la commande de consigne pour générer la tension de consigne Vsetpoint_n de sorte que lorsque Isense_n est supérieur à la référence de courant, la tension de consigne Vsetpoint_n est réduite.

3. Alimentation électrique régulée (600) de la revendication 2, dans laquelle le CGC (802) est configuré pour configurer le filtre (810) par l'intermédiaire de la commande de filtrage de sorte que la bande passante de la boucle de contrôle d'impédance de sortie suit la bande passante de la boucle de rétroaction négative qui contrôle Vreg.

4. Alimentation électrique régulée (600) de la revendication 2, dans laquelle le CGC (802) est configurable en régime permanent pour générer la commande de gain afin de définir un gain négatif, une valeur négative de Zeff_n est donc la valeur faible pour compenser partiellement une valeur positive de Zext_n afin de réduire une impédance de sortie positive totale Zout_n pour améliorer la régulation tout en facilitant le partage du courant de charge entre la pluralité d'alimentations électriques (606).

5. Alimentation électrique régulée (600) de la revendication 1, dans laquelle chaque convertisseur de puissance (608) est configuré pour être redressé passivement afin de fournir ou de drainer exclusivement (XOR) Iout_n à la borne de charge (604), dans laquelle le régulateur est configuré pour commander les valeurs élevées et faibles de Zeff_n de sorte que tous les N PC participent à la fourniture ou au drain du courant de charge sur une plage spécifiée de courants de charge pris en charge.

6. Alimentation électrique régulée (600) de la revendication 1, dans laquelle chaque convertisseur de puissance (608) est configuré pour être redressé de manière synchrone afin de fournir et de drainer Iout_n à la borne de charge (604), dans laquelle le régulateur est configuré pour commander la valeur faible de Zeff_n lorsque Iout > 2*IC en l'absence de charge, de sorte que IC sous charge soit approximativement nul, où IC est un courant de circulation entre les alimentations électriques (606).

7. Alimentation électrique régulée (600) de la revendication 1, dans laquelle chaque ledit régulateur d'impédance de sortie à pentes multiples (612, 800, 1206, 1306) est configuré pour répondre à une commande de synchronisation de démarrage afin de mettre en œuvre une procédure de démarrage pour générer la commande Vx_n afin de faire monter la tension Vc_n, la tension régulée Vreg_n passe donc d'une valeur de démarrage initiale à une valeur initiale pour la tension de consigne Vsetpoint_n, tout en commandant Zeff_n de passer de la valeur élevée à la valeur faible au cours d'une période de démarrage.

8. Alimentation électrique régulée (600) de la revendication 7, dans laquelle tous les régulateurs d'impédance de sortie à pentes multiples (612, 800, 1206, 1306) sont configurés pour recevoir une commande de synchronisation de démarrage commune afin d'initialiser la procédure de démarrage.

9. Alimentation électrique régulée (600) de la revendication 7, dans laquelle chaque ledit régulateur d'impédance de sortie à pentes multiples (612, 800, 1206, 1306) est configuré pour commander la valeur élevée de Zeff_n afin de faciliter le partage du courant de charge et de réduire le déséquilibre de courant Ib au début de la procédure de démarrage et pour commander la valeur faible de Zeff_n, qui est fixée à une valeur nominale pour le fonctionnement en régime permanent, une fois que Iout_n est d'une magnitude suffisante pour faciliter le partage du courant de charge à la valeur faible de Zeff_n.

10. Alimentation électrique régulée (600) de la revendication 1, dans laquelle chaque ledit régulateur d'impédance de sortie à pentes multiples (612, 800, 1206, 1306) est configuré pour mettre en œuvre une procédure en régime permanent dans laquelle la commande Vx_n est générée pour contrôler Vc_n afin de contrôler la régulation de Vout tout en commandant Zeff_n en réponse à Isense_n pour se déplacer entre les valeurs élevées et faibles à mesure que Isense_n change, de sorte que Zeff_n diminue lorsque Iout_n augmente.

11. Alimentation électrique régulée (600) de la revendication 10, dans laquelle le régulateur d'impédance de sortie (612, 800, 1206, 1306) est configurable en régime permanent pour définir une valeur négative pour Zeff_n afin de compenser partiellement une valeur positive pour Zext_n afin de réduire une impédance de sortie positive totale Zout pour améliorer la régulation tout en maintenant le partage du courant de charge entre les alimentations électriques (606).

12. Alimentation électrique régulée (600) de la revendication 1, dans laquelle le régulateur d'impédance de sortie à pentes multiples (612, 800, 1206, 1306) est configuré pour répondre à une entrée de mode afin de sélectionner des configurations de convertisseur de puissance uniques ou multiples,

dans laquelle, dans la configuration multiple N > 1, le régulateur (612, 800, 1206, 1306) est configuré pour réduire la tension de consigne Vsetpoint_n à mesure que le courant de sortie Iout_n augmente afin de faciliter le partage du courant de charge entre la pluralité d'alimentations électriques (606) et pour commander la valeur élevée de Zeff_n pour Iout_n inférieure à la valeur spécifiée afin de réduire le déséquilibre de courant Ib et pour commander la valeur faible de Zeff_n pour Iout_n supérieure à la valeur spécifiée afin d'améliorer la régulation de charge ;
dans laquelle, dans la configuration unique N = 1, le régulateur est configuré pour définir une valeur négative pour Zeff_n afin de compenser sensiblement une valeur positive de Zext_n pour augmenter la tension de consigne Vsetpoint_n à mesure que le courant de sortie Iout_n augmente afin d'améliorer la régulation de charge.

13. Alimentation électrique régulée (600) de la revendication 12, dans laquelle, dans la configuration multiple N > 1, le régulateur (612, 800, 1206, 1306) est configuré pour mettre en œuvre une procédure de démarrage et une procédure en régime permanent,

dans laquelle, lors de la procédure de démarrage, le régulateur (612, 800, 1206, 1306) est configuré pour répondre à une commande de synchronisation de démarrage afin de générer la commande Vx_n pour faire monter la tension Vc_n, la tension régulée Vreg_n, passe donc de zéro volt à la tension de consigne Vsetpoint_n, tout en commandant Zeff_n de passer d'une valeur élevée de démarrage pour réduire le déséquilibre de courant Ib à une valeur faible de démarrage pour améliorer la régulation de charge pendant une période de démarrage ; et dans laquelle, pendant la procédure en régime permanent, le régulateur est configuré pour générer la commande Vx_n afin de contrôler la régulation de Vout tout en commandant Zeff_n en réponse à Isense_n de passer entre des valeurs élevées et faibles en régime permanent lorsque Isense_n change, de sorte que Zeff_n diminue lorsque Iout_n augmente afin de réduire le déséquilibre de courant Ib lorsque Iout_n est faible et d'améliorer la régulation de charge lorsque Iout_n est élevé.

FIG. 1
(PRIOR ART)

FIG. 2
(PRIOR ART)

FIG. 3
(PRIOR ART)

FIG. 4
(PRIOR ART)

FIG. 5
(PRIOR ART)

FIG. 6

EP 4 449 603 B1

FIG. 7

FIG. 8

EP 4 449 603 B1

FIG. 9

EP 4 449 603 B1

FIG. 10

24

FIG. 11

FIG. 12

EP 4 449 603 B1

FIG. 13

EP 4 449 603 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106961101

- EP 3447882 A